# EUROPEAN PATENT SPECIFICATION

(11) **EP 2 032 968 B1**
(45) Date of publication and mention of the grant of the patent: **09.01.2019**
(21) Application number: 07750830.7
(22) Date of filing: 16.02.2007
(51) Int. Cl.: G01N 21/31, G01N 21/47, G01N 21/85

(54) **DIFFUSE REFLECTION PROBE FOR OPTICAL MEASUREMENTS**
DIFFUSE-REFLEXION-SONDE FÜR OPTISCHE MESSUNGEN
SONDE À RÉFLEXION DIFFUSE POUR MESURES OPTIQUES

(30) Priority: 17.02.2006 US 774578 P
(43) Date of publication of application: 11.03.2009
(73) Proprietor: ColVisTec AG, 12489 Berlin (DE)
(72) Inventor: O'ROURKE, Patrick E., Georgia 30907 (US)
(74) Representative: Lucas, Phillip Brian
(86) International application number: PCT/US2007/004018
(87) International publication number: WO 2007/097996

(56) References cited:
- DE-A1- 2 636 420
- DE-A1- 10 330 641
- US-A- 3 885 878

## Description

### FIELD OF THE INVENTION

The present invention relates to optical probes such as those for use with spectrometers in obtaining spectra for analysis of the reflected color of materials. More particularly, it relates to a diffuse reflection probe for inspecting a product by contact therewith, while the product is undergoing industrial processing and is moving relative to said probe.

### BACKGROUND TO THE INVENTION

Real time, inline analysis of characteristics such as color of materials in industrial processes is an important capability, particularly for manufacturing quality control. As constituents are combined and processed, changes in these characteristics are possible and are often inevitable. Knowing when changes occur and why they occur is essential in producing uniformly high-quality products.

It is not always easy to measure composition and color of material inline while the material is undergoing industrial processing especially when the material is small and glossy, such as thin shiny filaments for use in textile manufacturing, but color specifications are often a critical characteristic of textile fibers.

Optical probes are capable of revealing a great deal of information about industrial processes, such as the color of extruded filaments, for example. However, a significant problem associated with optical probes is the quality of their measurements depends on the absence of spectral noise from stray reflections, including reflections on the inside surface of the probe window. This requirement" in turn dictates a precisely made probe. Yet, in an industrial environment, the probe must also be rugged.

Accordingly, there remains a need for an optical transmission probe system that is rugged and low cost and is capable of measuring accurately the diffuse spectral reflections of products such as filaments and fibers.

DE 103 30 641 A1 discloses a reflectance sensor for inspecting liquid pigments in a sample cell or stationary solid samples such as metal sheets, films and plastic surfaces that are pressed against the sensor. The sensor comprises a circular arrangement of illumination fibres and a receiving fibre. The illumination fibres are arranged to direct light to converge on a flat measuring window for inspecting the sample.

US 3 885 878 A discloses colour measuring devices for determining the colour of a sample such as paint. The device includes a sensing head which is positioned to receive light from the sample. This head collects light from a number of directions from the sample and the collected light is conducted, preferably along bundles of fibre optics, to a light detector. Preferably these are five to six bundles of fibre optics which collect light from the sample in directions at 45 degrees to the plane of the sample and spaced evenly around the sample. Interposed in one or more of the paths of the collected light are individual filters, being chosen so that the output from the detector is representative of one of the three primary stimuli X, Y, and Z of the Standard Observer as defined by the Commission Internationale de L'Eclairage or some other function.

DE 26 36 420 A1 discloses an apparatus for illuminating a textile sample while it is held in a fixed position and for measuring or analysing the colour of the textile sample. A sample of textile is supported on the pad of an elevator mechanism that holds the sample against an instrument head. The head has an opaque housing provided with a chamber having an opening therein. A glass plate is mounted in the head and covers the opening and presses against the textile sample to provide a stable reference plane. The head includes an illuminating fiber optic bundle that directs light substantially perpendicular to the textile sample. A plurality of additional fibre optic bundles is mounted to receive diffuse light reflected from the sample. The elevator includes a pad of translucent polyethylene material that backs up the textile sample and takes on the color of the sample so that there are no adverse effects due to light showing through the sample and reflecting from the plate.

### SUMMARY OF THE INVENTION

In one aspect the invention provides a diffuse reflection probe for inspecting a product by contact therewith, while the product is undergoing industrial processing and is moving relative to said probe, which probe comprises a housing holding a forward end of an optic fibre bundle, which bundle has a plurality of optic fibres for transmitting light toward said product and receiving light reflected from said product, an anterior part of said housing holding a lens at one end;
characterised by a guide ring just behind said one end, said guide ring comprising a central hole dimensioned to fit a reflection optic fibre, and a plurality of surrounding holes each of which is dimensioned to fit a transmission optic fibre and is angled with respect to a front face of said guide ring such that, in use, light beams emerging from said transmission fibres converge at a foremost part of said lens in line with said central hole and a portion of the light reflected from said product enters said reflection fibre;
a sleeve within said anterior part of said housing, which sleeve comprises threads in engagement with corresponding threads on said housing whereby during manufacture said sleeve is moveable along the longitudinal axis of said probe toward a forward end of said anterior housing, so as to ensure that said guide ring remains fully seated against said lens and that said lens remains fully seated against said forward end during use;
and in that said lens has (i) a flat rear face which abuts said front face of said guide ring, and (ii) a spherical front face a part of which is exposed, the arrangement being such that, in use, said exposed part of said lens provides a surface for contacting said product and that resists adherence to said lens of a filament being drawn across the surface.

In a further aspect, the invention provides a kit for inspecting a product by diffuse reflection, which kit comprises a spectrometer and at least one diffuse reflection probe as defined above.

In a third aspect, the invention provides a method for monitoring the progress of a reaction or manufacturing process, which method comprises the step of inspecting said reaction or manufacturing process using a diffuse reflection probe as defined above.

### BRIEF DESCRIPTION OF THE DRAWINGS

How the invention may be put into effect will now be described, by way of example only, with reference to the accompanying drawings, in which:

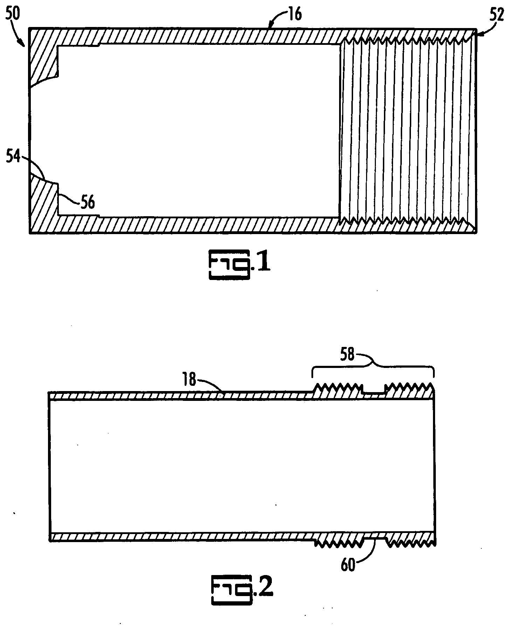

Fig. 1 is a side cross sectional view of the anterior housing of the present probe, according to a preferred embodiment of the present invention;
Fig. 2 is a side cross sectional view of the sleeve of the present probe, according to a preferred embodiment of the present invention;

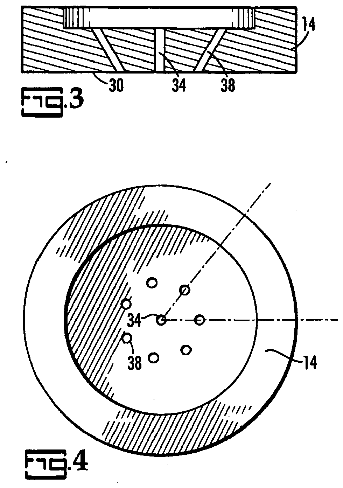

Fig. 3 is a side cross sectional view of the guide ring of the present probe, according to a preferred embodiment of the present invention;
Fig. 4 is a bottom view of the ring guide shown in Fig. 3, according to a preferred embodiment of the present invention;

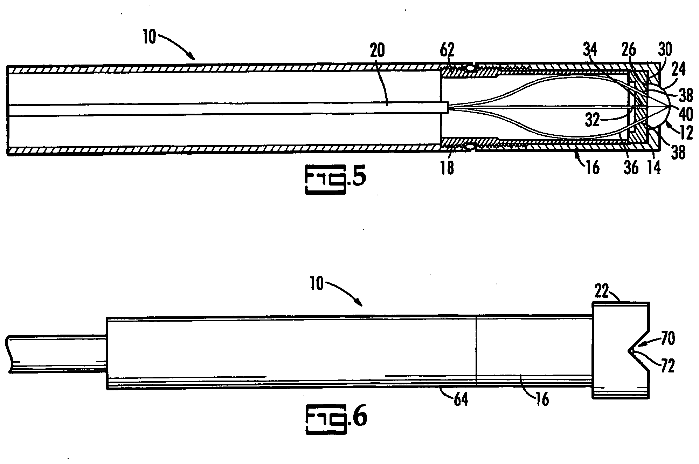

Fig. 5 is a side cross sectional view of the assembled probe, according to a preferred embodiment of the present invention; and
Fig. 6 is a side view of the assembled probe fitted with a posterior housing of the present probe with filament spacer on the end thereof, according to an alternate preferred embodiment of the present invention.

### DETAILED DESCRIPTION OF THE INVENTION

In an embodiment a diffuse reflection probe is specifically adapted for measuring the color of filaments. The probe includes an anterior housing that holds a lens having a spherical arc at one end with a guide ring just behind it. A sleeve is threadably inserted within the anterior housing to hold the ring and lens against the front of the housing, leaving only a portion of the lens exposed. Seven fibers of an optic fiber bundle, including seven transmission fibers surrounding one reflection fiber, are fitted into holes formed in the guide ring. The reflection fiber is fitted into the central hole and the seven transmission fibers are fitted into the surrounding holes, all of which hold their fiber at a 29° angle with respect to the central fiber so that the light beams emitted by the transmitting fibers into the lens converge at the foremost point on the lens. For measuring the color of filaments, particularly moving filaments, a guide spacer is mounted to the end of the anterior housing forward of the lens. Two diametrically opposing notches formed in the spacer guide a filament across the foremost point of the lens where the light beams from the seven surrounding optic fibers converge. That light reflects diffusely off the fiber and a portion of the reflected light, at the zero degree point enters the reflecting fiber and returns thereby to a spectrometer for analysis.

A feature of the embodiment is the arrangement of optic fibers, with seven fibers transmitting light and surrounding one additional optic fiber that receives the reflected light. The advantage of this arrangement is that ample light impinges on the filament from plural directions and allows a stronger diffuse light signal with relatively less light from the gloss or shine from the filament and interior surfaces of the probe. Accordingly the color measurements of the filament are more accurate.

Another feature of the embodiment is the guide ring that holds the seven optic fibers in precise alignment for more accurate and consistent measurements.

Still another feature of the embodiment is the notched spacer that helps to hold the target filament in the right position for accurate measurements. The filament passes across the spacer positioned securely in the notches which also help to hold it in position against the hemispherical lens.

The present embodiment is a diffuse reflection probe. It directs light at various angles at an object, such as a filament or bundle of filaments, and detects the diffusely reflected light so as to facilitate, using a spectrometer, measurement of the color spectrum of the object. In a preferred embodiment, the present invention includes a spacer that holds a moving filament in the correct location for an accurate measurement of the filament's color as the filament is moving across the surface of the lens. The instant embodiment can also be adapted for use in high temperature and pressure environments by careful choice of materials and their coefficients of thermal expansion (CTE). For example, if a lens-holding component is made of titanium, a sapphire lens will be of nearly equal CTE and suitable for optical measurements of polymers in an extruder. Similarly, if a lens-holding component is made of Hastelloy, a sapphire lens will be of smaller CTE and, when used with a 316 stainless steel sleeve having a larger CTE than Hastelloy, is suitable for optical measurements of polymers in an extruder.

Referring now to the figures, the present probe, generally indicated by reference number 10 has five main components. It has a lens 12, a guide ring 14, an anterior housing 16, a sleeve 18, and optic fiber bundle 20. Optionally, probe 10 has a spacer 22, as will be described presently.

Lens 12 is a hemispherical lens, that is, it has a spherical front face 24 and a flat rear face 26 preferably being transparent to the light being used for the measurements with the probe. Behind lens 12 (when the spherical front face 24 of lens 12 is considered to be forward) is the front face 30 of guide ring 14. Guide ring 14 has one central hole 34 dimensioned to receive a single optic fiber 32 and one or more surrounding holes (preferably seven) 38 nearly evenly spaced around the central hole, each of which being also dimensioned to receive a single optic fiber 36. Central hole 34 is formed to be perpendicular to a front face 30 of guide ring 14. Surrounding holes 38 are formed to be at an angle with respect to front face 30, preferably 29° with respect to front face 30. The 29° angle is preferable because, when the fibers are fixed into the guide ring and polished flat, the light exits the probe at 45° in air. The thickness of guide ring 14 and the radial positions of surrounding holes 38 are selected so that, when front face 30 of guide ring 14 is placed against the rear face 26 of lens 12, light beams emerging from fibers 38 converge at the foremost part 40 of spherical front face 24 of lens 12 in line with central hole 34.

Lens 12 and guide ring 14 are held in the hollow interior of anterior housing 16 which as a forward end 50 and a rear end 52. Forward end 50 is shaped at 54 and formed to the hemispherical contour of lens 12 for good engagement. Guide ring 14 is larger in diameter than hemispheric lens 12 and, accordingly, the interior of forward end 50 of anterior housing 16 has a step change in diameter at 56 just rearward of the area where lens 12 seats so that front face 30 of guide ring 14 can be positioned against rear face 26 of lens 12, and held in alignment with the optical axis of lens 12.

Sleeve 18 is fitted within anterior housing 16 and threaded thereto to assure that guide ring 14 is fully seated against lens 12 and lens 12 is fully seated against forward end 50 of anterior housing 16. The inside diameter of sleeve 18 is dimensioned large enough to introduce minimum stress into fiber-optic bundle which must curve from the 29° insertion angle of guide ring 14, but not so large as to weaken the walls of sleeve 18 which must hold guide ring 14 against lens 12, and force lens 12 into shaped contour 54 forming a gas tight seal.

Fiber optic bundle 20 is then inserted into housing 16 and the optical fibers 32, 36, inserted into central hole 34 and surrounding holes 38, respectively, of guide ring 14. The threads 58 on sleeve 18 are split, leaving a gap 60. Sleeve 18 is threaded to anterior housing 16 to gap 60 and then, with fiber optic bundle 20 in place, an O-ring 62 can be applied to gap 60 and posterior housing 64 threaded to sleeve 18, using O ring 62 to seal the interface between anterior housing 16 and posterior housing 64. Alternatively, posterior housing 64 can be attached in another manner (e.g., welding) to anterior housing 16.

Finally, spacer 22 may be applied for the specific application being monitored. For example, it might be used for measuring color of a filament 70, particularly a moving filament. The spacer may be fixed onto the probe in a variety of ways (for example, press fit, threaded, or use of lock bolts). Spacer 22 is attached to the forward end 50 of anterior housing 16 extending forward of lens 12. A pair of diametrically opposing notches 72 is formed in spacer 22 to receive, and position, the material being monitored (e.g., filament 70) so that it just touches the foremost part 40 of lens 12.

It is important that lens 12 be hemispherical for a number of reasons. First, a hemispherical lens provides a good shape for the optical requirements of the probe system. Second, a hemispherical shape is less difficult to make than other shapes. Third, the curve of a hemispherical lens will fit snuggly against hemispherical contour of forward end 50 of anterior housing 16 for a good fit. Other combinations of corresponding shapes will provide a good seal notwithstanding the fact that they may be more difficult and expensive to make. Moreover, a hemispherically shaped lens provides an optically convenient surface for the convergence of light from surrounding optic fibers 36 and provides a surface that resists the adherence of the filament being drawn across it.

In use, light is directed through the seven surrounding optic fibers 36 as a filament is drawn across spacer 22 and seats in notches 72. The light from surrounding optic fibers 36 converges on foremost point 40 of lens 12 and is diffusely reflected by filament 70. A portion of the diffusely reflected light is picked up by central optic fiber 32 and returned to a spectrometer for analysis of the color of filament 70 based on its reflection spectrum.

This invention also relates to a process for monitoring the progress of a reaction or a manufacturing process by using the diffuse reflection probe system disclosed herein.

It is intended that the scope of the present invention include all modifications that incorporate its principal design features, and that the scope and limitations of the present invention are to be determined by the scope of the appended claims and their equivalents. It also should be understood, therefore, that the inventive concepts herein described are interchangeable and/or they can be used together in still other permutations of the present invention, and that other modifications and substitutions will be apparent to those skilled in the art from the foregoing description of the preferred embodiments without departing from the scope of the present invention.

## Claims

1. A diffuse reflection probe (10) for inspecting a product by contact therewith, while the product is undergoing industrial processing and is moving relative to said probe, which probe comprises a housing holding a forward end of an optic fibre bundle (20), which bundle has a plurality of optic fibres for transmitting light toward said product and receiving light reflected from said product, an anterior part (16) of said housing holding a lens (12) at one end;
**characterised by** a guide ring (14) just behind said one end, said guide ring comprising a central hole (34) dimensioned to fit a reflection optic fibre (32), and a plurality of surrounding holes (38) each of which is dimensioned to fit a transmission optic fibre (36) and is angled with respect to a front face (30) of said guide ring such that, in use, light beams emerging from said transmission fibres (36) converge at a foremost part (40) of said lens (12) in line with said central hole (34) and a portion of the light reflected from said product enters said reflection fibre (32);
a sleeve (18) within said anterior part (16) of said housing, which sleeve comprises threads in engagement with corresponding threads on said housing whereby during manufacture said sleeve (18) is moveable along the longitudinal axis of said probe toward a forward end (50) of said anterior housing (16), so as to ensure that said guide ring (14) remains fully seated against said lens (12) and that said lens (12) remains fully seated against said forward end (50) during use;
and in that said lens (12) has (i) a flat rear face (26) which abuts said front face (30) of said guide ring (14), and (ii) a spherical front face (24) a part of which is exposed, the arrangement being such that, in use, said exposed part of said lens (12) provides a surface for contacting said product and that resists adherence to said lens of a filament being drawn across the surface.

2. A diffuse reflection probe as claimed in claim 1, wherein said anterior part (16) of said housing further comprises a spherical contour (54) against which a part of said spherical front face (24) is pressed by said guide ring (14) to form a gas tight seal.

3. A diffuse reflection probe as claimed in claim 1 or 2, wherein said reflection fibre (32) is perpendicular to a front face (30) of said guide ring (14) and each surrounding hole (38) forms an angle of 29° with respect to said reflection fibre (32).

4. A diffuse reflection probe as claimed in any preceding claim, further comprising a spacer (22) mounted on a forward end (50) of said anterior housing (16) that extends forwardly of said lens (12), which spacer comprises a pair of diametrically opposed notches (72) for receiving and positioning a product such as a filament (70), so that said product just touches said foremost part (40) of said lens (12).

5. A kit for inspecting a product by diffuse reflection, which kit comprises a spectrometer and at least one diffuse reflection probe as claimed in any preceding claim.

6. A method for monitoring the progress of a reaction or manufacturing process, which method comprises the step of inspecting said reaction or manufacturing process using a diffuse reflection probe (10) as claimed in any of claims 1-4.

7. A method as claimed in claim 6, wherein said reaction or manufacturing process comprises manufacture of an extruded filament (70), said method further comprising the step of drawing said extruded filament across a lens (12) of said probe, whereby light emitted from optic fibres (36) in said probe converges on a foremost point (40) of said lens and is diffusely reflected by said filament (70), a portion of said reflected light being received by a reflection fibre (32).

8. A method as claimed in claim 6 or 7, where said method is performed in real-time and inline with said reaction or manufacturing process.

## Patentansprüche

1. Diffuse Reflexionssonde (10) zum Inspizieren von einem Produkt durch In-Kontakt-Treten damit, während das Produkt eine industrielle Verarbeitung durchläuft und in Bezug auf die Sonde bewegt wird, wobei die Sonde ein Gehäuse umfasst, das ein Vorwärtsende von einem optischen Faserbündel (20) beherbergt, wobei das Bündel eine Vielzahl von optischen Fasern zum Übertragen von Licht in Richtung des Produkts und zum Aufnehmen von Licht, das von dem Produkt reflektiert wird, aufweist, wobei ein anteriorer Teil (16) des Gehäuses an einem Ende eine Linse (12) beherbergt;
**gekennzeichnet durch** einen Führungsring (14) direkt hinter dem einen Ende, wobei der Führungsring ein zentrales Loch (34), das so dimensioniert ist, dass es für eine optischer Reflexionsfaser (32) passend ist, und eine Vielzahl von umgebenden Löchern (38) umfasst, von denen jedes so dimensioniert ist, dass es für eine optische Übertragungsfaser (36) passend ist und in Bezug auf eine Vorderseite (30) des Führungsrings in einem Winkel verläuft, so dass in Verwendung Lichtstrahlen, die aus den Übertragungsfasern (36) austreten, an einem vordersten Teil (40) der Linse (12) in Übereinstimmung mit dem zentralen Loch (34) zusammenlaufen und einen Teil des Lichts, das von dem Produkt reflektiert wird, in die Reflexionsfaser (32) eintritt;
eine Hülse (18) innerhalb des anterioren Teils (16) des Gehäuses, wobei die Hülse Gewinde umfasst, die mit entsprechenden Gewinden an dem Gehäuse in Eingriff stehen, wodurch, während der Herstellung, die Hülse (18) entlang der Längsachse der Sonde in Richtung eines Vorwärtsendes (50) des anterioren Gehäuses (16) bewegbar ist, um während der Verwendung sicherzustellen, dass der Führungsring (14) vollständig gegen die Linse (12) gelagert bleibt und dass die Linse (12) vollständig gegen das Vorwärtsende (50) gelagert bleibt;
und dass die Linse (12) (i) eine flache Rückseite (26), die an die Vorderseite (30) des Führungsrings (14) angrenzt, und (ii) eine sphärische Vorderseite (24) aufweist, von der ein Teil exponiert ist, wobei die Anordnung so ist, dass in Verwendung der exponierte Teil der Linse (12) eine Oberfläche zum In-Kontakt-Treten mit dem Produkt bereitstellt, die einer Anhaftung von einem Filament an die Linse widersteht, dass über die Oberfläche gezogen wird.

2. Diffuse Reflexionssonde nach Anspruch 1, wobei der anteriore Teil (16) des Gehäuses ferner eine sphärische Kontur (54) umfasst, gegen die durch den Führungsring (14) ein Teil der sphärischen Vorderseite (24) gedrückt wird, um eine gasdichte Dichtung zu bilden.

3. Diffuse Reflexionssonde nach Anspruch 1 oder 2, wobei die Reflexionsfaser (32) rechtwinklig zu einer Vorderseite (30) des Führungsrings (14) verläuft und jedes umgebende Loch (38) einen Winkel von 29° in Bezug auf die Reflexionsfaser (32) ausbildet.

4. Diffuse Reflexionssonde nach einem der vorhergehenden Ansprüche, ferner umfassend einen Abstandhalter (22), der an einem Vorwärtsende (50) des anterioren Gehäuses (16) angebracht ist und sich von der Linse (12) vorwärts erstreckt, wobei der Abstandhalter ein Paar diametral gegenüberliegende Kerben (72) umfasst, um ein Produkt aufzunehmen und zu positionieren, wie zum Beispiel ein Filament (70), so dass das Produkt nur den vordersten Teil (40) der Linse (12) berührt.

5. Kit zum Inspizieren von einem Produkt mittels diffuser Reflexion, wobei der Kit ein Spektrometer und mindestens eine diffuse Reflexionssonde nach einem der vorhergehenden Ansprüche umfasst.

6. Verfahren zum Überwachen von dem Fortschritt von einer Reaktion oder einem Herstellungsverfahren, wobei das Verfahren den Schritt des Inspizierens von der Reaktion oder dem Herstellungsverfahren umfasst, wobei eine diffuse Reflexionssonde (10) nach einem der Ansprüche 1-4 verwendet wird.

7. Verfahren nach Anspruch 6, wobei die Reaktion oder das Herstellungsverfahren das Herstellen von einem extrudierten Filament (70) umfasst, wobei das Verfahren ferner den Schritt des Ziehens von dem extrudierten Filament über eine Linse (12) der Sonde umfasst, wodurch Licht, dass aus optischen Fasern (36) in der Sonde emittiert wird, an einem vordersten Punkt (40) der Linse zusammenläuft und durch das Filament (70) diffus reflektiert wird, wobei ein Teil des reflektierten Lichts durch eine Reflexionsfaser (32) aufgenommen wird.

8. Verfahren nach Anspruch 6 oder 7, wobei das Verfahren in Echtzeit und inline mit der Reaktion oder dem Herstellungsverfahren durchgeführt wird.

## Revendications

1. Sonde à réflexion diffuse (10) pour inspecter un produit par contact avec celui-ci, pendant que le produit subit un traitement industriel et se déplace par rapport à ladite sonde, laquelle sonde comprend un logement supportant une extrémité avant d'un faisceau de fibres optiques (20), lequel faisceau contient une pluralité de fibres optiques pour transmettre de la lumière vers ledit produit et recevoir la lumière réfléchie par ledit produit, une partie antérieure (16) dudit logement supportant une lentille (12) à une extrémité ; **caractérisée par** un guide annulaire (14) juste derrière ladite une extrémité, ledit guide annulaire comprenant un trou central (34) dimensionné pour recevoir une fibre optique de réflexion (32), et une pluralité de trous périphériques (38) dont chacun est dimensionné pour recevoir une fibre optique de transmission (36) et est incliné par rapport à une face avant (30) dudit guide annulaire, de sorte qu'en conditions d'utilisation, les faisceaux lumineux émergeant desdites fibres de transmission (36) convergent au niveau d'une partie la plus en avant (40) de ladite lentille (12) dans l'alignement dudit trou central (34) et une partie de la lumière réfléchie par ledit produit pénètre dans ladite fibre de réflexion (32) ;
un manchon (18) à l'intérieur de ladite partie antérieure (16) dudit logement, ledit manchon comprend des filets en prise avec des filets correspondants sur ledit logement de sorte que, pendant la fabrication, ledit manchon (18) puisse se déplacer dans l'axe longitudinal de ladite sonde vers une extrémité avant (50) dudit logement antérieur (16), de façon à garantir que ledit guide annulaire (14) reste parfaitement plaqué contre ladite lentille (12) et que ladite lentille (12) reste parfaitement plaquée contre ladite extrémité avant (50) en conditions d'utilisation ; et en ce que ladite lentille (12) présente (i) une face arrière plate (26) qui vient en appui sur ladite face avant (30) dudit guide annulaire (14), et (ii) une face avant sphérique (24) dont une partie est à découvert, l'agencement étant tel qu'en conditions d'utilisation, ladite partie à découvert de ladite lentille (12) fournit une surface pour venir en contact avec ledit produit et qui résiste à l'adhérence à ladite lentille d'un filament étiré devant la surface.

2. Sonde à réflexion diffuse selon la revendication 1, dans laquelle ladite partie antérieure (16) dudit logement comprend en outre un contour sphérique (54) contre lequel une partie de ladite face avant sphérique (24) est pressée par ledit guide annulaire (14) pour former un joint étanche aux gaz.

3. Sonde à réflexion diffuse selon la revendication 1 ou 2, dans laquelle ladite fibre de réflexion (32) est perpendiculaire à une face avant (30) dudit guide annulaire (14) et chaque trou périphérique (38) forme un angle de 29° par rapport à ladite fibre de réflexion (32).

4. Sonde à réflexion diffuse selon l'une quelconque des revendications précédentes, comprenant en outre une pièce d'espacement (22) montée sur une extrémité avant (50) dudit logement antérieur (16) qui s'étend vers l'avant de ladite lentille (12), ladite pièce d'espacement comprend une paire d'encoches diamétralement opposées (72) pour recevoir et positionner un produit tel qu'un filament (70), de sorte que ledit produit touche à peine ladite partie la plus en avant (40) de ladite lentille (12).

5. Kit pour inspecter un produit par réflexion diffuse, ledit kit comprend un spectromètre et au moins une sonde à réflexion diffuse selon l'une quelconque des revendications précédentes.

6. Procédé pour surveiller l'avancement d'un processus de fabrication ou d'une réaction, lequel procédé comprend l'étape consistant à inspecter ledit processus de fabrication ou réaction au moyen d'une sonde à réflexion diffuse (10) selon l'une quelconque des revendications 1 à 4.

7. Procédé selon la revendication 6, dans lequel ledit processus de fabrication ou réaction comprend la fabrication d'un filament extrudé (70), ledit procédé comprenant en outre l'étape consistant à étirer ledit filament extrudé devant une lentille (12) de ladite sonde, de sorte que la lumière émise par des fibres optiques (36) de ladite sonde converge en un point le plus en avant (40) de ladite lentille et soit réfléchie de façon diffuse par ledit filament (70), une partie de ladite lumière réfléchie étant reçue par une fibre de réflexion (32).

8. Procédé selon la revendication 6 ou 7, dans lequel ledit procédé est réalisé en temps réel et en ligne avec ledit processus de fabrication ou réaction.
